# EUROPÄISCHE PATENTSCHRIFT

(11) **EP 3 841 044 B1**
(45) Veröffentlichungstag und Bekanntmachung des Hinweises auf die Patenterteilung: **27.03.2024**
(21) Anmeldenummer: 19755370.4
(22) Anmeldetag: 15.08.2019
(51) Int. Cl.: B65G 57/06, B65G 57/24

(54) **PALETTIERVORRICHTUNG UND VERFAHREN ZUM BETRIEB EINER PALETTIERVORRICHTUNG**
PALLETISING DEVICE AND METHOD FOR OPERATING A PALLETISING DEVICE
DISPOSITIF DE PALETTISATION ET PROCÉDÉ DE FONCTIONNEMENT D'UN DISPOSITIF DE PALETTISATION

(30) Priorität: 21.08.2018 DE 102018214045
(43) Veröffentlichungstag der Anmeldung: 30.06.2021
(73) Patentinhaber: Körber Supply Chain Automation Eisenberg GmbH, 67304 Eisenberg (DE)
(72) Erfinder: BLASIUS, Christopher, 67725 Börrstadt (DE); STOLLHOF, Karlheinz, 67814 Dannenfels (DE)
(74) Vertreter: Hörschler, Wolfram Johannes
(86) Internationale Anmeldenummer: PCT/EP2019/071949
(87) Internationale Veröffentlichungsnummer: WO 2020/038828

(56) Entgegenhaltungen:
- EP-A1- 2 653 417
- DE-A1- 3 300 329
- DE-A1- 19 943 800
- FR-A1- 2 576 294
- FR-A1- 2 696 711

## Beschreibung

Die Erfindung betrifft eine Palettiervorrichtung, umfassend ein Absetzband, welches einen umlaufenden Fördergurt aufweist, welcher eine Transportfläche zum Transport von Artikellagen definiert, und eine Komprimiervorrichtung, welche einen frontseitigen Ans und einen rückseitigen Anschlag aufweist, wobei das Absetzband relativ zu der Komprimiervorrichtung zwischen einer ersten Längsposition, in welcher die Transportfläche zu der Komprimiervorrichtung in eine Längsrichtung versetzt angeordnet ist, und einer zweiten Längsposition, in welcher eine auf der Transportfläche befindliche Artikellage in der Längsrichtung zwischen den Anschlägen angeordnet ist, in die Längsrichtung beweglich ist. Die Erfindung betrifft auch ein Verfahren zum Betrieb einer erfindungsgemäßen Palettiervorrichtung.

### Stand der Technik

Eine Palettiervorrichtung dient dazu, Artikel, insbesondere Stückgüter, oder Gebinde zum Transport auf Paletten anzuordnen. Dazu werden die Artikel beispielsweise zunächst zu einzelnen Artikellagen zusammengefasst und dann lagenweise auf einer Palette, beziehungsweise auf einem bereits auf der Palette befindlichen Lagenstapel, abgesetzt. Eine gattungsgemäße Palettiervorrichtung ist beispielsweise aus dem Dokument DE 199 43 800 A1 bekannt.

Zur Palettierung durchlaufen die Artikel normalerweise zunächst eine Zuführvorrichtung, in der die zunächst einreihig oder mehrreihig hintereinander ankommenden Artikel zu stapelfähigen Artikellagen verschoben und/oder zusammengestellt werden. Die stapelfähigen Artikellagen werden dann nacheinander an die Palettiervorrichtung übergeben, welche die Artikellagen auf einem gewünschten Stapelplatz, insbesondere auf einer Palette, absetzt.

Die Palettiervorrichtung umfasst dazu beispielsweise ein Absetzband, welches einen umlaufenden Fördergurt umfasst. Der Fördergurt definiert eine Transportfläche zum Transport der Artikel, beziehungsweise der Artikellagen. Das Absetzband der Palettiervorrichtung ist in der Regel an einer Hubeinrichtung vertikal beweglich.

Bei der Palettierung wird jeweils eine stapelfähige Artikellage von der Zuführvorrichtung auf die Transportfläche des Absetzbandes gefördert, und das Absetzband wird vertikal auf die dem Lagenstapel entsprechende Höhe verfahren. Anschließend wird die Lage auf dem Lagenstapel abgesetzt. Die unterste Lage eines Lagenstapels wird dabei direkt auf der Palette abgesetzt.

Aus der Druckschrift US 2014/0294553 A1 ist eine Palettiervorrichtung bekannt, welche ein Förderband und eine Absetzvorrichtung umfasst. Bei der Palettierung wird dabei eine Artikellage von dem Förderband auf eine teilbare Bodenfläche der Absetzvorrichtung gefördert und dort mittels Schiebern komprimiert und fixiert. Durch Wegfahren der teilbaren Bodenfläche und Wegbewegen der Schieber von der Artikellage wird die Artikellage auf dem Lagenstapel abgesetzt.

Auch aus der Druckschrift US 2013/0160403 A1 ist eine Palettiervorrichtung bekannt, welche ein Förderband und eine Absetzvorrichtung mit einer Bodenfläche umfasst. Bei der Palettierung wird eine Artikellage von dem Förderband auf die Bodenfläche der Komprimiervorrichtung gefördert. Die Komprimiervorrichtung weist einen feststehenden oder beweglichen Anschlag zum Ausrichten der Artikellage auf der Bodenfläche auf.

Die Druckschrift DE 100 18 385 A1 offenbart ein Verfahren und eine Vorrichtung zum Laden von Stückgut. Die Vorrichtung umfasst einen umlaufenden Fördergurt, der an einem Roboterarm angebracht ist. Beim Abladen des Stückguts erfolgt eine Synchronisierung der Bewegung des Fördergurts mit der Bewegung des Roboterarms.

Auch aus den Dokumenten EP 2 653 417 A1, EP 2 881 347 B1, EP 2 547 612 B1 und DE 10 2011 088 849 A1 sind Palettiervorrichtungen sowie Verfahren zur Palettierung von Artikellagen bekannt.

### Aufgabe

Aufgabe der vorliegenden Erfindung ist es, eine Palettiervorrichtung der eingangs genannten Art zu verbessern. Insbesondere ist es Aufgabe der Erfindung, ein präzises Absetzen der Artikellagen auf einem Lagenstapel zu gewährleisten und eine Beschädigung der Artikellagen beim Transportieren sowie beim Absetzen zu vermeiden.

### Lösung

Diese Aufgabe wird durch eine Palettiervorrichtung mit den Merkmalen des Anspruchs 1 gelöst. Vorteilhafte Ausgestaltungen und Weiterbildungen der Erfindung sind Gegenstand der Unteransprüche.

Eine gattungsgemäße Palettiervorrichtung umfasst ein Absetzband, welches einen umlaufenden Fördergurt aufweist. Der Fördergurt definiert eine Transportfläche zum Transport von Artikellagen. Die Palettiervorrichtung umfasst auch eine Komprimiervorrichtung, welche mindestens einen frontseitigen Anschlag und einen rückseitigen Anschlag aufweist. Der frontseitige Anschlag und der rückseitige Anschlag sind dabei in einer Längsrichtung zueinander versetzt angeordnet.

Das Absetzband ist relativ zu der Komprimiervorrichtung zwischen einer ersten Längsposition, in welcher die Transportfläche zu der Komprimiervorrichtung in der Längsrichtung versetzt angeordnet ist, und einer zweiten Längsposition, in welcher eine auf der Transportfläche befindliche Artikellage in der Längsrichtung zwischen dem frontseitigen Anschlag und dem rückseitigen Anschlag angeordnet ist, in die Längsrichtung beweglich.

Erfindungsgemäß umfasst das Absetzband eine um eine erste Drehachse drehbare erste Umlenkrolle, wobei ein Durchmesser der ersten Umlenkrolle vorteilhaft maximal 2% der Breite des Fördergurts beträgt. Die erste Drehachse verläuft dabei in eine Querrichtung, welche rechtwinklig zu der Längsrichtung orientiert ist.

Bei einer in Betrieb befindlichen Palettiervorrichtung verlaufen die Längsrichtung und die Querrichtung jeweils horizontal, also parallel zu einem Fußboden, auf dem die Palettiervorrichtung steht. Eine Vertikalrichtung verläuft vertikal zu dem Fußboden und rechtwinklig zu der Längsrichtung sowie rechtwinklig zu der Querrichtung.

Erfindungsgemäß ist auch eine Steuereinrichtung zur Steuerung des Absetzbandes vorgesehen. Die Steuereinrichtung steuert die Bewegung des Absetzbandes in Längsrichtung, also von der ersten Längsposition in die zweite Längsposition und zurück. Die Steuereinrichtung steuert auch den Antrieb des umlaufenden Fördergurts. Die Steuereinrichtung ist dazu eingerichtet, den umlaufenden Fördergurt mit derart veränderlichen Geschwindigkeiten anzutreiben, dass optional bei einer Bewegung des Absetzbandes von der zweiten Längsposition in die erste Längsposition die auf der Transportfläche befindliche Artikellage zeitlich nacheinander gegen den frontseitigen Anschlag sowie gegen den rückseitigen Anschlag gedrückt wird.

Dadurch können die einzelnen Artikel der Artikellage sehr präzise direkt auf einer Palette oder auf einem bereits auf der Palette befindlichen Lagenstapel abgesetzt werden. Insbesondere können auch komplizierte Setzbilder beim Absetzen der Artikel erzeugt werden. Solche Setzbilder können insbesondere Lücken zwischen einzelnen Artikeln in Längsrichtung aufweisen.

Gemäß einer weiteren vorteilhaften Ausgestaltung, welche nicht Teil der vorliegenden Erfindung ist, ist eine zusätzliche Steuereinrichtung zur Steuerung des Absetzbandes vorgesehen, welche die Bewegung des Absetzbandes in Längsrichtung, also von der ersten Längsposition in die zweite Längsposition und zurück sowie den Antrieb des umlaufenden Fördergurts steuert, und welche dazu eingerichtet ist, den umlaufenden Fördergurt weitgehend synchron mit der Bewegung des Absetzbandes anzutreiben, so dass Berührungen der Artikellage mit den Anschlägen minimiert werden.

Dadurch kann die Geschwindigkeit des umlaufenden Fördergurts so exakt mit der Bewegung des Absetzbandes in Längsrichtung synchronisiert werden, dass die Produkte der Artikellage die Anschläge der Komprimierung nicht oder nur minimal berühren und so geschont werden.

Das Absetzband umfasst vorzugsweise auch eine um eine Antriebsachse drehbare Antriebstrommel zum Antreiben des Fördergurts. Die Antriebsachse verläuft ebenfalls in Querrichtung. Ein Durchmesser der Antriebstrommel ist größer als der Durchmesser der ersten Umlenkrolle. Vorteilhaft ist dabei auch ein Antriebsmotor zum Antreiben der Antriebstrommel mit variabler Geschwindigkeit vorgesehen.

Vorzugsweise liegt der Fördergurt in einem Winkelbereich von 180° an der ersten Umlenkrolle an. Durch den verhältnismäßig kleinen Durchmesser der ersten Umlenkrolle und das Anliegen des Fördergurts in dem Winkelbereich von 180° weist das Absetzband vorteilhaft eine geringe Höhe in Vertikalrichtung auf. Das Absetzband ist somit verhältnismäßig dünn in Vertikalrichtung ausgebildet. Beim Absetzen der Artikellage auf der Palette oder auf dem Lagenstapel ist somit die Fallhöhe in Vertikalrichtung sehr gering. Dadurch wird das Absetzen der Artikellage vorteilhaft vereinfacht.

Gemäß einer bevorzugten Ausgestaltung der Erfindung beträgt eine Länge der Transportfläche zwischen 80% und 120%, besonders bevorzugt zwischen 90% und 110%, der Breite des Fördergurts. Die Länge der Transportfläche ist dabei die Ausdehnung der Transportfläche in Längsrichtung. Die Breite des Fördergurts ist die Ausdehnung des Fördergurts in Querrichtung.

Gemäß einer vorteilhaften Weiterbildung der Erfindung sind das Absetzband und die Komprimiervorrichtung relativ zueinander in eine Vertikalrichtung beweglich. Dadurch können nach dem Bewegen des Absetzbandes in die Längsrichtung zu der zweiten Längsposition die Komprimiervorrichtung und das Absetzband relativ zueinander derart in die Vertikalrichtung bewegt werden, dass die auf der Transportfläche befindliche Artikellage sich in Vertikalrichtung auf Höhe der Anschläge befindet. Die Steuereinrichtung steuert vorzugsweise auch die Bewegung des Absetzbandes und der Komprimiervorrichtung relativ zueinander in Vertikalrichtung.

Gemäß einer weiteren vorteilhaften Weiterbildung der Erfindung ist der rückseitige Anschlag in Vertikalrichtung von einer Warteposition in eine Arbeitsposition beweglich. In der Warteposition befindet sich der rückseitige Anschlag in Vertikalrichtung oberhalb der auf der Transportfläche befindlichen Artikellage. In der Arbeitsposition befindet sich der rückseitige Anschlag in der Vertikalrichtung auf Höhe der auf der Transportfläche befindlichen Artikellage. Die Steuereinrichtung steuert vorzugsweise auch die Bewegung des rückseitigen Anschlags in Vertikalrichtung.

Die Aufgabe wird auch durch ein Verfahren zum Betrieb einer Palettiervorrichtung mit den Merkmalen des Anspruchs 9 gelöst. Vorteilhafte Ausgestaltungen und Weiterbildungen der Erfindung sind Gegenstand der Unteransprüche.

Das erfindungsgemäße Verfahren zum Betrieb einer erfindungsgemäßen Palettiervorrichtung umfasst folgende Schritte:
Zunächst erfolgt ein Fördern mindestens einer Artikellage auf die Transportfläche des Absetzbandes, während das Absetzband sich in der ersten Längsposition befindet, in welcher die Transportfläche zu der Komprimiervorrichtung in die Längsrichtung versetzt angeordnet ist, bei Bedarf auch ein Verfahren des Absetzbandes in vertikaler Richtung.

Danach erfolgt ein Bewegen des Absetzbandes relativ zu der Komprimiervorrichtung in die Längsrichtung zu der zweiten Längsposition, in welcher eine auf der Transportfläche befindliche Artikellage in der Längsrichtung zwischen dem frontseitigen Anschlag und dem rückseitigen Anschlag der Komprimiervorrichtung angeordnet ist.

Dann erfolgt ein Bewegen des Absetzbandes relativ zu der Komprimiervorrichtung in die Längsrichtung zurück zu der ersten Längsposition.

Während dieser Bewegung des Absetzbandes relativ zu der Komprimiervorrichtung in die Längsrichtung wird der umlaufende Fördergurt, in einer Ausführungsform, welche nicht Teil der vorliegenden Erfindung ist, weitgehend synchron mit der Bewegung des Absetzbandes in die Längsrichtung angetrieben, so dass Berührungen der Artikellage mit den Anschlägen minimiert werden.

Erfindungsgemäß wird während dieser Bewegung des Absetzbandes relativ zu der Komprimiervorrichtung in die Längsrichtung der umlaufende Fördergurt mit derart veränderlichen Geschwindigkeiten angetrieben, dass die auf der Transportfläche befindliche Artikellage zeitlich nacheinander gegen den frontseitigen Anschlag sowie gegen den rückseitigen Anschlag gedrückt wird.

Insbesondere kann der Fördergurt zu Beginn der besagten Bewegung des Absetzbandes geringfügig schneller laufen, wodurch die Artikellage gegen den frontseitigen Anschlag gedrückt wird. Zum Ende der Bewegung des Absetzbandes kann der Fördergurt geringfügig langsamer laufen, wodurch die Artikellage gegen den rückseitigen Anschlag gedrückt wird. Dadurch kann die Artikellage in Längsrichtung nach zwei Seiten, nämlich nach vorne und nach hinten, ausgerichtet werden. Dies ist insbesondere nützlich, wenn die Artikellage Lücken zwischen einzelnen Artikel aufweisen soll.

Die Bewegung des Absetzbandes relativ zu der Komprimiervorrichtung in die Längsrichtung zurück zu der ersten Längsposition und der Umlauf des Fördergurts sind derart synchronisiert, dass das Absetzband unter der Artikellage heraus fährt. Die Artikellage wird dadurch vertikal auf der Palette oder auf dem Lagenstapel abgesetzt. Die Bewegung des Absetzbandes relativ zu der Komprimiervorrichtung in die Längsrichtung zurück zu der ersten Längsposition und der Umlauf des Fördergurts werden von der Steuereinrichtung gesteuert.

Gemäß einer vorteilhaften Ausgestaltung der Erfindung werden nach dem Bewegen des Absetzbandes in die Längsrichtung zu der zweiten Längsposition die Komprimiervorrichtung und das Absetzband relativ zueinander derart in die Vertikalrichtung bewegt, dass die auf der Transportfläche befindliche Artikellage sich in Vertikalrichtung auf Höhe der Anschläge befindet. Die Bewegung des Absetzbandes und der Komprimiervorrichtung relativ zueinander in Vertikalrichtung wird vorzugsweise auch von der Steuereinrichtung gesteuert.

Gemäß einer weiteren vorteilhaften Ausgestaltung der Erfindung wird nach dem Bewegen des Absetzbandes in die Längsrichtung zu der zweiten Längsposition der rückseitige Anschlag von einer Warteposition, in welcher der rückseitige Anschlag sich in Vertikalrichtung oberhalb der Artikellage befindet, in eine Arbeitsposition bewegt, in welcher der rückseitige Anschlag sich in der Vertikalrichtung auf Höhe der Artikellage befindet. Die Bewegung des rückseitigen Anschlags in Vertikalrichtung wird vorzugsweise auch von der Steuereinrichtung gesteuert.

Gemäß einer weiteren vorteilhaften Ausgestaltung der Erfindung unterbleibt während des Bewegens des Absetzbandes in die Längsrichtung von der ersten Längsposition zu der zweiten Längsposition ein Antrieb des umlaufenden Fördergurts.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Die Figuren stellen den Gegenstand der Erfindung nur schematisch dar. Es zeigen:
- Figur 1: eine schematische Frontansicht einer Palettiervorrichtung,
- Figur 2: eine weitere schematische Frontansicht der Palettiervorrichtung aus Figur 1,
- Figur 3: eine Draufsicht auf ein Absetzband,
- Figur 4: eine Schnittdarstellung des Absetzbandes entlang der Schnittlinie A-A in Figur 3,
- Figur 5: eine schematische Schnittdarstellung des Absetzbandes und der Komprimiervorrichtung aus Figur 2 und
- Figur 6: eine schematische Schnittdarstellung der Komprimiervorrichtung aus Figur 5 nach Absetzen einer Artikellage.

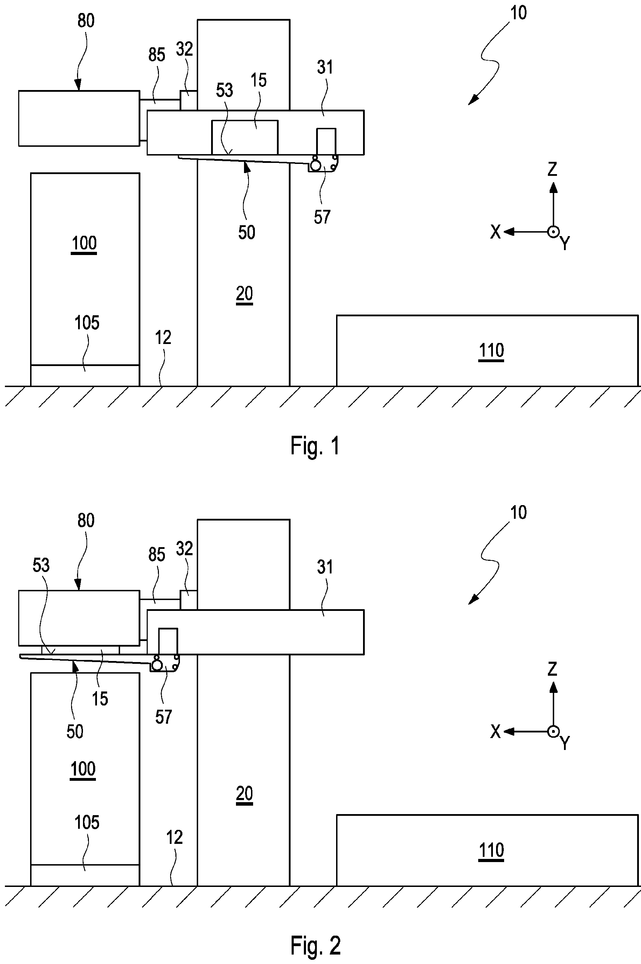

Figur 1 zeigt eine schematische Frontansicht einer Palettiervorrichtung 10. Die Palettiervorrichtung 10 steht auf einem Fußboden 12 und dient zum Absetzen von Gütern, insbesondere von einer Artikellage 15, auf einem Lagenstapel 100, welcher sich auf einer Palette 105 befindet. Die Artikellage 15 wird der Palettiervorrichtung 10 von einer Zuführvorrichtung 110 zugeführt. Dabei werden zunächst einzelne Güter von der Zuführvorrichtung 110 zu einer stapelfähigen Artikellage 15 zusammengefasst, und die Artikellage 15 wird anschließend in eine Längsrichtung X weiter zu der Palettiervorrichtung 10 transportiert. Die Längsrichtung X verläuft parallel zu dem Fußboden 12.

Die Palettiervorrichtung 10 umfasst eine Hubvorrichtung 20, welche sich im Wesentlichen in eine Vertikalrichtung Z von dem Fußboden 12 weg erstreckt. Die Vertikalrichtung Z verläuft rechtwinklig zu dem Fußboden 12 und rechtwinklig zu der Längsrichtung X. Eine Querrichtung Y erstreckt sich rechtwinklig zu der Vertikalrichtung Z und rechtwinklig zu der Längsrichtung X.

An der Hubvorrichtung 20 ist vorliegend ein erster Wagen 31 angeordnet, welcher in Vertikalrichtung Z beweglich ist. An dem ersten Wagen 31 ist ein Absetzband 50 befestigt. Das Absetzband 50 ist somit in die Vertikalrichtung Z relativ zu der Hubvorrichtung 20 beweglich. Das Absetzband 50 ist zusätzlich in Längsrichtung X relativ zu dem ersten Wagen 31 und der Hubvorrichtung 20 beweglich.

Die Absetzband 50 umfasst einen hier verdeckten umlaufenden Fördergurt 52, welcher eine Transportfläche 53 zum Transport der Artikellage 15 definiert. Die Transportfläche 53 erstreckt sich in einer Ebene, welche durch die Längsrichtung X und die Querrichtung Y definiert ist. Die Vertikalrichtung Z verläuft somit rechtwinklig zu der Transportfläche 53. Das Absetzband 50 weist auch zwei Seitenwände 57 auf, welche sich vorwiegend in Längsrichtung X erstrecken und parallel zueinander verlaufen.

An der Hubvorrichtung 20 ist vorliegend auch ein zweiter Wagen 32 angeordnet, welcher in Vertikalrichtung Z beweglich ist. An dem zweiten Wagen 32 ist eine Komprimiervorrichtung 80 befestigt. Die Komprimiervorrichtung 80 ist somit in die Vertikalrichtung Z relativ zu der Hubvorrichtung 20 beweglich. Der erste Wagen 31 und der zweite Wagen 32 sind annähernd unabhängig voneinander in die Vertikalrichtung Z beweglich. Somit sind auch die Komprimiervorrichtung 80 und das Absetzband 50 annähernd unabhängig voneinander und relativ zueinander in die Vertikalrichtung Z beweglich.

Die Komprimiervorrichtung 80 weist einen Arm 85 zur Befestigung an dem zweiten Wagen 32 auf. Das Absetzband 50 ist auch in die Längsrichtung X relativ zu der Komprimiervorrichtung 80 beweglich. Somit ist auch die Transportfläche 53 relativ zu der Komprimiervorrichtung 80 in die Längsrichtung X beweglich.

Es ist auch denkbar, dass der zweite Wagen 32 entfällt, und dass die Komprimiervorrichtung 80 ebenfalls an dem ersten Wagen 31 befestigt ist. in diesem Fall sind die Komprimiervorrichtung 80 und das Absetzband 50 gemeinsam relativ zu der Hubvorrichtung 20 in die Vertikalrichtung Z beweglich. Die Komprimiervorrichtung 80 und das Absetzband 50 sind in diesem Fall auch relativ zueinander in die Längsrichtung X, jedoch nicht relativ zueinander in die Vertikalrichtung Z beweglich.

Ebenso ist es denkbar, dass zwischen der Zuführvorrichtung 110 und dem Absetzband 50 eine weitere Hubeinrichtung vorhanden ist, um die Hubstrecke des Absetzbandes 50 zu minimieren.

In der hier gezeigten Darstellung befindet sich eine Artikellage 15 auf der Transportfläche 53 des Absetzbandes 50. Das Absetzband 50 befindet sich in einer ersten Längsposition. In der ersten Längsposition ist die Transportfläche 53 des Absetzbandes 50 zu der Komprimiervorrichtung 80 in die Längsrichtung X versetzt angeordnet.

In Figur 2 ist eine weitere schematische Frontansicht der Palettiervorrichtung 10 aus Figur 1 dargestellt. Im Unterschied zu der Darstellung in Figur 1 befindet sich bei der Darstellung in Figur 2 das Absetzband 50 in einer zweiten Längsposition. In der zweiten Längsposition ist die Transportfläche 53 des Absetzbandes 50 direkt unter der Komprimiervorrichtung 80 angeordnet. Dabei ragt die auf der Transportfläche 53 befindliche Artikellage 15 in die Komprimiervorrichtung 80 hinein.

Beim Palettieren wird die Artikellage 15 auf den auf der Palette 105 befindlichen Lagenstapel 100 abgesetzt. Die Palette 105 befindet sich dabei in der Vertikalrichtung Z unter der Komprimiervorrichtung 80. Mehrere Artikellagen 15 bilden auf der Palette 105 den Lagenstapel 100.

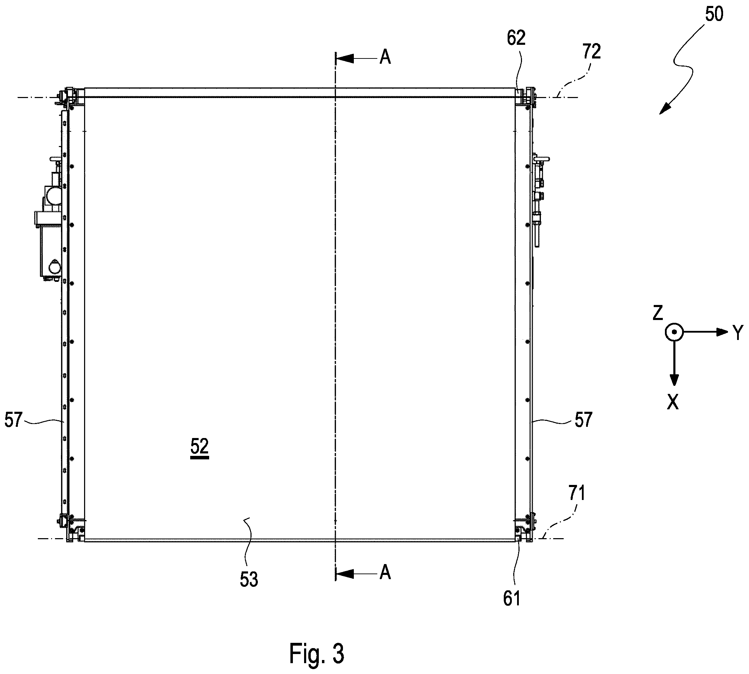

Figur 3 zeigt eine Draufsicht auf das in Figur 1 dargestellte Absetzband 50 der Palettiervorrichtung 10. Die Hubvorrichtung 20 sowie der daran angeordnete erste Wagen 31 sind dabei nicht dargestellt. Das Absetzband 50 umfasst unter anderem eine erste Umlenkrolle 61, welche um eine erste Drehachse 71 drehbar ist, und eine zweite Umlenkrolle 62, die um eine zweite Drehachse 72 drehbar ist. Die erste Drehachse 71 und die zweite Drehachse 72 verlaufen parallel zueinander in die Querrichtung Y. Die erste Umlenkrolle 61 und die zweite Umlenkrolle 62 sind in den Seitenwänden 57 gelagert.

Die Transportfläche 53 des Fördergurts 52 erstreckt sich in der Längsrichtung X im Wesentlichen zwischen der ersten Umlenkrolle 61 und der zweiten Umlenkrolle 62. Der Fördergurt 52 weist eine Ausdehnung in Querrichtung Y auf, welche auch als Breite bezeichnet wird. Die Transportfläche 53 weist eine Ausdehnung in Längsrichtung X auf, welche auch als Länge bezeichnet wird. Die Transportfläche 53 des Fördergurts 52 ist rechteckig, vorwiegend annähernd quadratisch, ausgestaltet. Die Breite des Fördergurts 52 entspricht also zumindest annähernd der Länge der Transportfläche 53. Der Abstand der Seitenwände 57 zueinander ist geringfügig größer als die Breite der Transportfläche 53.

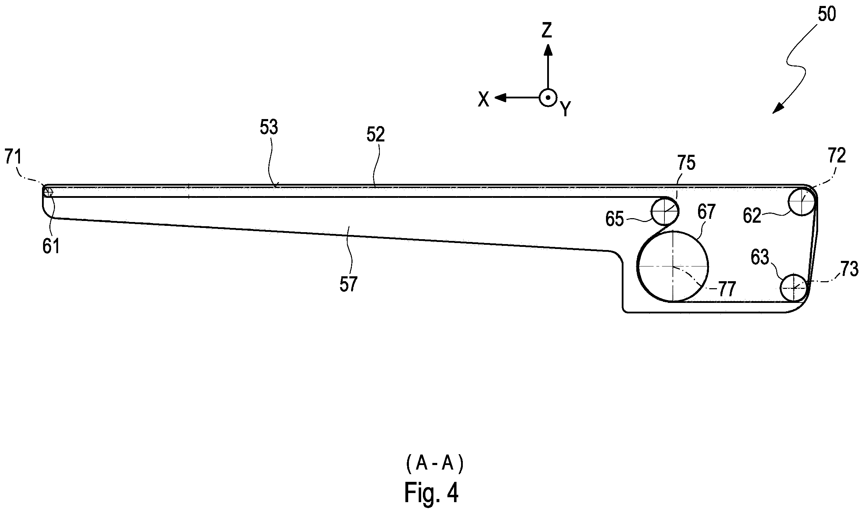

Figur 4 zeigt eine Schnittdarstellung des Absetzbandes 50 aus Figur 3 entlang der dort eingezeichneten Schnittlinie A-A. Das Absetzband 50 umfasst, wie bereits erwähnt, die um die erste Drehachse 71 drehbare erste Umlenkrolle 61, sowie die um die zweite Drehachse 72 drehbare zweite Umlenkrolle 62 und den umlaufenden Fördergurt 52. Das Absetzband 50 umfasst ferner eine Spannrolle 65, die um eine Spannachse 75 drehbar ist. Zusätzlich umfasst das Absetzband 50 eine dritte Umlenkrolle 63, welche um eine dritte Drehachse 73 drehbar ist, und eine Antriebstrommel 67, welche um eine Antriebsachse 77 drehbar ist, und welche von einem hier nicht dargestellten Antriebsmotor antreibbar ist.

Ein Durchmesser der ersten Umlenkrolle 61 beträgt vorteilhaft maximal 2%, vorliegend etwa 1,5%, der Breite des Fördergurts 52. Der Fördergurt 52 liegt in einem Winkelbereich von 180° an der ersten Umlenkrolle 61 an. Durch den verhältnismäßig kleinen Durchmesser der ersten Umlenkrolle 61 und das Anliegen des Fördergurts 52 in dem Winkelbereich von 180° weist das Absetzband 50 eine verhältnismäßig geringe Höhe in Vertikalrichtung Z auf.

Die Antriebstrommel 67 dient zum Antrieb des Fördergurts 52. Wenn der Fördergurt 52 von der Antriebstrommel 67 angetrieben wird, bewegt sich eine auf der Transportfläche 53 befindliche Artikellage 15 in die Längsrichtung X in Richtung auf die erste Drehachse 71 zu. Die Antriebsachse 77 verläuft ebenfalls in Querrichtung Y. Ein Durchmesser der Antriebstrommel 67 ist größer als der Durchmesser der ersten Umlenkrolle 61.

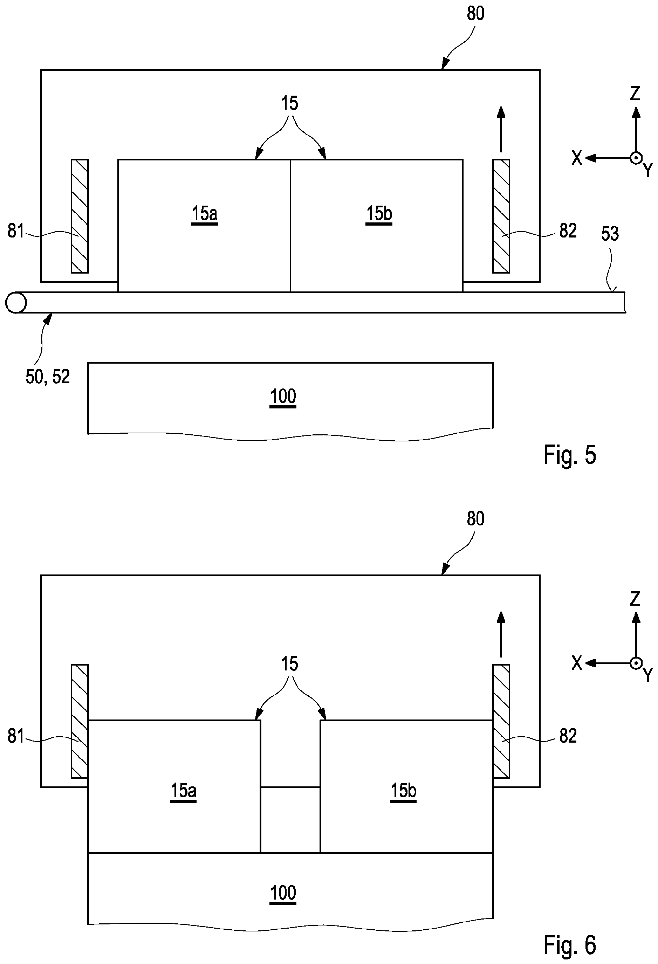

Figur 5 zeigt eine schematische Schnittdarstellung des Absetzbandes 50 und der Komprimiervorrichtung 80 aus Figur 2. Die gewählte Schnittebene verläuft dabei rechtwinklig zu der Querrichtung Y und parallel zu der Längsrichtung X sowie parallel zu der Vertikalrichtung Z. Die Komprimiervorrichtung 80 weist einen frontseitigen Anschlag 81 und einen rückseitigen Anschlag 82 auf. Das Absetzband 50 befindet sich in der zweiten Längsposition, und die auf der Transportfläche 53 des Absetzbandes 50 befindliche Artikellage 15 ist in der Längsrichtung X zwischen dem frontseitigen Anschlag 81 und dem rückseitigen Anschlag 82 angeordnet.

Die Artikellage 15 umfasst in diesem Beispiel einen ersten Artikel 15a und einen zweiten Artikel 15b. Die Artikel 15a, 15b sind dabei in Längsrichtung X zueinander versetzt angeordnet. Der erste Artikel 15a ist dem frontseitigen Anschlag 81 zugewandt, und der zweite Artikel 15b ist dem rückseitigen Anschlag 82 zugewandt.

In der hier gezeigten Darstellung befindet sich der rückseitige Anschlag 82 in einer Arbeitsposition. In der Arbeitsposition befindet sich der rückseitige Anschlag 82 in der Vertikalrichtung Z auf der gleichen Höhe wie der frontseitige Anschlag 81 und wie die Artikellage 15. Der rückseitige Anschlag 82 ist in die Vertikalrichtung Z translatorisch in eine Warteposition beweglich. Mit einem Pfeil ist die Bewegungsrichtung des rückseitigen Anschlags 82, nämlich translatorisch in die Vertikalrichtung Z zwischen der Arbeitsposition und der Warteposition, angegeben. Alternativ kann auch eine rotatorische Bewegung des rückseitigen Anschlags 82 zwischen der Warteposition und der Arbeitsposition erfolgen.

Wenn der rückseitige Anschlag 82 sich in der Warteposition befindet kann die auf der Transportfläche 53 des Absetzbandes 50 befindliche Artikellage 15 in die Längsrichtung X unter dem rückseitigen Anschlag 82 hindurch in die Komprimiervorrichtung 80 hinein bewegt werden. Dazu wird das Absetzband 50 mit der Artikellage 15 von der ersten Längsposition, in welcher die Transportfläche 53 zu der Komprimiervorrichtung 80 in Längsrichtung X versetzt angeordnet ist, in die zweite Längsposition bewegt, in welcher die auf der Transportfläche 53 befindliche Artikellage 15 in der Längsrichtung X zwischen den beiden Anschlägen 81, 82 angeordnet ist. Anschließend wird der rückseitige Anschlag 82 nach unten in die Arbeitsposition bewegt. Dann befindet sich auch der rückseitige Anschlag 82 in der Vertikalrichtung Z auf Höhe der Artikellage 15.

Es ist auch denkbar, dass der rückseitige Anschlag 82 nicht in der Vertikalrichtung Z beweglich ist, sondern sich stets auf der gleichen Höhe in der Vertikalrichtung Z wie der frontseitige Anschlag 81 befindet. In diesem Fall wird das Absetzband 50 mit der Artikellage 15 zunächst von der ersten Längsposition, in welcher die Transportfläche 53 zu der Komprimiervorrichtung 80 in Längsrichtung X versetzt angeordnet ist, in die zweite Längsposition bewegt, in welcher die auf der Transportfläche 53 befindliche Artikellage 15 in der Längsrichtung X zwischen den beiden Anschlägen 81, 82 angeordnet ist. Dabei befindet sich das Absetzband 50 mit der Artikellage 15 in Vertikalrichtung Z unterhalb der Komprimiervorrichtung 80. Die Anschläge 81, 82 befinden sich in der Vertikalrichtung Z somit oberhalb der Artikellage 15. Anschließend wird die Komprimiervorrichtung 80 relativ zu dem Absetzband 50 in Vertikalrichtung Z nach unten bewegt, bis die Anschläge 81, 82 sich in der Vertikalrichtung Z auf Höhe der Artikellage 15 befinden.

Zum Absetzen der Artikellage 15 auf den auf der Palette 105 befindlichen Lagenstapel 100 wird das Absetzband 50 von der zweiten Längsposition in die erste Längsposition zurückbewegt. Die Bewegung des Absetzbandes 50 relativ zu der Komprimiervorrichtung 80 in die Längsrichtung X zurück zu der ersten Längsposition und der Umlauf des Fördergurts 52 sind derart synchronisiert, dass das Absetzband 50 unter der Artikellage 15 heraus fährt. Die Artikellage 15 wird dadurch vertikal auf dem Lagenstapel 100 abgesetzt. Die Bewegung des Absetzbandes 50 relativ zu der Komprimiervorrichtung 80 in die Längsrichtung X und der Umlauf des Fördergurts 52 werden dabei von einer hier nicht dargestellten Steuereinrichtung gesteuert.

Bei der besagten Bewegung des Absetzbandes 50 von der zweiten Längsposition in die erste Längsposition wird der umlaufende Fördergurt 52 mit derart veränderlichen Geschwindigkeiten angetrieben, dass die auf der Transportfläche 53 befindliche Artikellage 15 zeitlich nacheinander gegen den frontseitigen Anschlag 81 sowie gegen den rückseitigen Anschlag 82 gedrückt wird. In einer alternativen Ausführungsform, welche nicht Teil der vorliegenden Erfindung ist, wird der umlaufende Fördergurt 52 weitgehend synchron mit der Bewegung des Absetzbandes 50 angetrieben, so dass Berührungen der Artikellage 15 mit den Anschlägen 81, 82 minimiert werden, insbesondere, dass die auf der Transportfläche 53 befindliche Artikellage 15 möglichst von den Anschlägen 81, 82 entfernt gehalten wird.

Zu Beginn der besagten Bewegung des Absetzbandes 50 von der zweiten Längsposition in die erste Längsposition wird der Fördergurt 52 geringfügig schneller angetrieben. Dadurch wird der erste Artikel 15a der Artikellage 15 gegen den frontseitigen Anschlag 81 gedrückt. Zum Ende der Bewegung des Absetzbandes 50 von der zweiten Längsposition in die erste Längsposition wird der Fördergurt 52 geringfügig langsamer angetrieben. Dadurch wird der zweite Artikel 15b der Artikellage 15 gegen den rückseitigen Anschlag 82 gedrückt. Dadurch wird die Artikellage 15 in Längsrichtung X nach zwei Seiten, nämlich nach vorne und nach hinten, ausgerichtet. Dadurch entsteht eine Lücke zwischen dem ersten Artikel 15a und dem zweiten Artikel 15b der Artikellage 15.

In Figur 6 wird eine schematische Schnittdarstellung der Komprimiervorrichtung 80 aus Figur 5 nach dem Absetzen der Artikellage 15 auf dem Lagenstapel 100 gezeigt. Das Absetzband 50 ist dabei bereits in Längsrichtung X zurück in die erste Längsposition gefahren. Der erste Artikel 15a der Artikellage 15 ist am dem frontseitigen Anschlag 81 ausgerichtet. Der zweite Artikel 15b der Artikellage 15 ist am dem rückseitigen Anschlag 82 ausgerichtet.

Die Artikellage 15 steht auf dem Lagenstapel 100, wobei zwischen dem ersten Artikel 15a und dem zweiten Artikel 15b in Längsrichtung X eine Lücke gebildet ist. Anschließend wird Komprimiervorrichtung 80 in Vertikalrichtung Z nach oben, also von dem Lagenstapel 100 weg, verfahren.

Die Erfindung ist nicht auf die hier beschriebenen Ausführungsbeispiele beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: Palettiervorrichtung
- 12: Fußboden
- 15: Artikellage
- 15a: erster Artikel
- 15b: zweiter Artikel
- 20: Hubvorrichtung
- 31: erster Wagen
- 32: zweiter Wagen
- 50: Absetzband
- 52: Fördergurt
- 53: Transportfläche
- 57: Seitenwand
- 61: erste Umlenkrolle
- 62: zweite Umlenkrolle
- 63: dritte Umlenkrolle
- 65: Spannrolle
- 67: Antriebstrommel
- 71: erste Drehachse
- 72: zweite Drehachse
- 73: dritte Drehachse
- 75: Spannachse
- 77: Antriebsachse
- 80: Komprimiervorrichtung
- 81: frontseitiger Anschlag
- 82: rückseitiger Anschlag
- 85: Arm
- 100: Lagenstapel
- 105: Palette
- 110: Zuführvorrichtung
- X: Längsrichtung
- Y: Querrichtung
- Z: Vertikalrichtung

## Patentansprüche

1. Palettiervorrichtung (10), umfassend
ein Absetzband (50), welches einen umlaufenden Fördergurt (52) aufweist, welcher eine Transportfläche (53) zum Transport von Artikellagen (15) definiert, und
eine Komprimiervorrichtung (80), welche mindestens einen frontseitigen Anschlag (81) und einen rückseitigen Anschlag (82) aufweist, wobei
das Absetzband (50) relativ zu der Komprimiervorrichtung (80) zwischen einer ersten Längsposition, in welcher die Transportfläche (53) zu der Komprimiervorrichtung (80) in eine Längsrichtung (X) versetzt angeordnet ist, und
einer zweiten Längsposition, in welcher eine auf der Transportfläche (53) befindliche Artikellage (15) in der Längsrichtung (X) zwischen den Anschlägen (81, 82) angeordnet ist,
in die Längsrichtung (X) beweglich ist,
wobei
das Absetzband (50) eine um eine erste Drehachse (71) drehbare erste Umlenkrolle (61) umfasst, wobei eine Steuereinrichtung zur Steuerung des Absetzbandes (50) vorgesehen ist, **dadurch gekennzeichnet, dass**
ein Durchmesser der ersten Umlenkrolle (61) maximal 2% der Breite des Fördergurts (52) beträgt, und dass
die Steuereinrichtung dazu eingerichtet ist, den umlaufenden Fördergurt (52) mit derart veränderlichen Geschwindigkeiten anzutreiben, dass bei einer Bewegung des Absetzbandes (50) von der zweiten Längsposition in die erste Längsposition
die auf der Transportfläche (53) befindliche Artikellage (15) zeitlich nacheinander gegen den frontseitigen Anschlag (1) sowie gegen den rückseitigen Anschlag (82) gedrückt wird.

2. Palettiervorrichtung (10) nach Anspruch 1, **dadurch**
**gekennzeichnet, dass**
das Absetzband (50) eine um eine Antriebsachse (77) drehbare Antriebstrommel (67) zum Antreiben des Fördergurts (52) umfasst.

3. Palettiervorrichtung (10) nach Anspruch 2,
**dadurch gekennzeichnet, dass**
ein Durchmesser der Antriebstrommel (67) größer ist als der Durchmesser der ersten Umlenkrolle (61).

4. Palettiervorrichtung (10) nach einem der Ansprüche 2 bis 3, **dadurch**
**gekennzeichnet, dass**
ein Antriebsmotor zum Antreiben der Antriebstrommel (67) mit variabler Geschwindigkeit vorgesehen ist.

5. Palettiervorrichtung (10) nach einem der vorstehenden Ansprüche, **dadurch**
**gekennzeichnet, dass**
der Fördergurt (52) in einem Winkelbereich von 180° an der ersten Umlenkrolle (61) anliegt.

6. Palettiervorrichtung (10) nach einem der vorstehenden Ansprüche, **dadurch**
**gekennzeichnet, dass**
eine Länge der Transportfläche (53) zwischen 80% und 120%
der Breite des Fördergurts (52) beträgt.

7. Palettiervorrichtung (10) nach einem der vorstehenden Ansprüche, **dadurch**
**gekennzeichnet, dass**
das Absetzband (50) und die Komprimiervorrichtung (80) relativ zueinander in eine Vertikalrichtung (Z) beweglich sind.

8. Palettiervorrichtung (10) nach einem der vorstehenden Ansprüche, **dadurch**
**gekennzeichnet, dass**
der rückseitige Anschlag (82) in eine Vertikalrichtung (Z) von einer Warteposition in eine Arbeitsposition beweglich ist.

9. Verfahren zum Betrieb einer Palettiervorrichtung (10) nach einem de vorstehenden Ansprüche, umfassend folgende Schritte:
- Fördern mindestens einer Artikellage (15) auf die Transportfläche (53) des Absetzbandes (50), während das Absetzband (50) sich in der ersten Längsposition befindet,
- Bewegen des Absetzbandes (50) in die Längsrichtung (X) zu der zweiten Längsposition,
wobei der umlaufende Fördergurt (52) mit derart veränderlichen Geschwindigkeiten angetrieben wird, dass
die auf der Transportfläche (53) befindliche Artikellage (15) zeitlich nacheinander gegen den frontseitigen Anschlag (81) sowie gegen den rückseitigen Anschlag (82) gedrückt wird.

10. Verfahren nach Anspruch 9, wobei nach dem Bewegen des Absetzbandes (50) in die Längsrichtung (X) zu der zweiten Längsposition die Komprimiervorrichtung (80) und das Absetzband (50) relativ zueinander derart in eine Vertikalrichtung (Z) bewegt werden, dass die auf der Transportfläche (53) befindliche Artikellage (15) sich in Vertikalrichtung (Z) auf Höhe der Anschläge (81, 82) befindet.

11. Verfahren nach Anspruch 9, wobei nach dem Bewegen des Absetzbandes (50) in die Längsrichtung (X) zu der zweiten Längsposition der rückseitige Anschlag (82) von einer Warteposition, in welcher der rückseitige Anschlag (82) sich in einer Vertikalrichtung (Z) oberhalb der Artikellage (15) befindet, in eine Arbeitsposition bewegt wird, in welcher der rückseitige Anschlag (82) sich in der Vertikalrichtung (Z) auf Höhe der Artikellage (15) befindet.

12. Verfahren nach einem der Ansprüche 9 bis 11, wobei während des Bewegens des Absetzbandes (50) in die Längsrichtung (X) von der ersten Längsposition zu der zweiten Längsposition, ein Antrieb des umlaufenden Fördergurts (52) unterbleibt.

## Claims

1. Palletizing apparatus (10) comprising
a set-down band (50) which has a circulating conveyor belt (52)
which defines a transport surface (53) for transporting article layers (15), and
a compressing apparatus (80) which has at least one front stop (81) and one rear stop (82), wherein
the set-down band (50) is movable relative to the compressing apparatus (80) in a longitudinal direction (X) between
a first longitudinal position, in which the transport surface (53) is arranged offset from the compressing apparatus (80) in the longitudinal direction (X), and
a second longitudinal position, in which an article layer (15) situated on the transport surface (53) is arranged between the stops (81, 82) in the longitudinal direction (X), wherein
the set-down band (50) comprises a first deflecting roller (61) which is rotatable about a first axis of rotation (71), wherein
provision is made of a control device for controlling the set-down band (50), **characterized in that**
a diameter of the first deflecting roller (61) is at most 2% of the width of the conveyor belt (52), and **in that**
the control device is configured to drive the circulating conveyor belt (52) at speeds which vary in such a way that,
during a movement of the set-down band (50) from the second longitudinal position into the first longitudinal position,
the article layer (15) situated on the transport surface (53) is pushed temporally in succession against the front stop (81) and against the rear stop (82).

2. Palletizing apparatus (10) according to Claim 1, **characterized in that**
the set-down band (50) comprises a drive drum (67), rotatable about a drive axis (77), for driving the conveyor belt (52).

3. Palletizing apparatus (10) according to Claim 2, **characterized in that**
a diameter of the drive drum (67) is greater than the diameter of the first deflecting roller (61).

4. Palletizing apparatus (10) according to either of Claims 2 and 3, **characterized in that**
provision is made of a drive motor for driving the drive drum (67) at variable speed.

5. Palletizing apparatus (10) according to one of the preceding claims, **characterized in that**
the conveyor belt (52) bears against the first deflecting roller (61) over an angle range of 180°.

6. Palletizing apparatus (10) according to one of the preceding claims, **characterized in that**
a length of the transport surface (53) is between 80% and 120%
of the width of the conveyor belt (52).

7. Palletizing apparatus (10) according to one of the preceding claims, **characterized in that**
the set-down band (50) and the compressing apparatus (80) are movable relative to one another in a vertical direction (Z).

8. Palletizing apparatus (10) according to one of the preceding claims, **characterized in that**
the rear stop (82) is movable in a vertical direction (Z) from a standby position into a working position.

9. Method for operating a palletizing apparatus (10) according to one of the preceding claims, comprising the following steps:
- conveying at least one article layer (15) onto the transport surface (53) of the set-down band (50) while the set-down band (50) is in the first longitudinal position,
- moving the set-down band (50) in the longitudinal direction (X) to the second longitudinal position, wherein
the circulating conveyor belt (52) is driven at speeds which vary in such a way that
the article layer (15) situated on the transport surface (53) is pushed temporally in succession against the front stop (81) and against the rear stop (82).

10. Method according to Claim 9, wherein,
after the movement of the set-down band (50) in the longitudinal direction (X) to the second longitudinal position,
the compressing apparatus (80) and the set-down band (50) are moved relative to one another in a vertical direction (Z) in such a way that
the article layer (15) situated on the transport surface (53) is situated at the height of the stops (81, 82) in the vertical direction (Z).

11. Method according to Claim 9, wherein,
after the movement of the set-down band (50) in the longitudinal direction (X) to the second longitudinal position,
the rear stop (82) is moved from a standby position, in which the rear stop (82) is situated above the article layer (15) in a vertical direction (Z),
into a working position, in which the rear stop (82)is situated at the height of the article layer (15) in the vertical direction (Z).

12. Method according to one of Claims 9 to 11, wherein, during the movement of the set-down band (50) in the longitudinal direction (X) from the first longitudinal position to the second longitudinal position, the circulating conveyor belt (52) is not driven.

## Revendications

1. Dispositif de palettisation (10), comprenant
une bande de dépôt (50), qui présente une courroie de convoyage (52) en circulation, laquelle définit une surface de transport (53) pour le transport de couches d'articles (15), et
un dispositif de compression (80), qui présente au moins une butée avant (81) et une butée arrière (82),
la bande de dépôt (50) étant mobile dans la direction longitudinale (X) par rapport au dispositif de compression (80) entre
une première position longitudinale, dans laquelle la surface de transport (53) est agencée en décalage par rapport au dispositif de compression (80) dans une direction longitudinale (X), et
une deuxième position longitudinale, dans laquelle une couche d'articles (15) se trouvant sur la surface de transport (53) est agencée dans la direction longitudinale (X) entre les butées (81, 82),
la bande de dépôt (50) comprenant un premier rouleau de renvoi (61) rotatif autour d'un premier axe de rotation (71), un système de commande étant prévu pour commander la bande de dépôt (50), **caractérisé en ce**
**qu'**un diamètre du premier rouleau de renvoi (61) est d'au maximum 2 % de la largeur de la courroie de convoyage (52), et en ce que
le système de commande est conçu pour entraîner la courroie de convoyage (52) en circulation à des vitesses variables de telle sorte que, lors d'un déplacement de la bande de dépôt (50) de la deuxième position longitudinale à la première position longitudinale,
la couche d'articles (15) se trouvant sur la surface de transport (53) est pressée successivement dans le temps contre la butée avant (81) ainsi que contre la butée arrière (82).

2. Dispositif de palettisation (10) selon la revendication 1, **caractérisé en ce que** la bande de dépôt (50) comprend un tambour d'entraînement (67) rotatif autour d'un axe d'entraînement (77) pour entraîner la courroie de convoyage (52).

3. Dispositif de palettisation (10) selon la revendication 2, **caractérisé en ce qu'**un diamètre du tambour d'entraînement (67) est supérieur au diamètre du premier rouleau de renvoi (61).

4. Dispositif de palettisation (10) selon l'une quelconque des revendications 2 à 3, **caractérisé en ce qu'**il est prévu un moteur d'entraînement pour entraîner le tambour d'entraînement (67) à une vitesse variable.

5. Dispositif de palettisation (10) selon l'une quelconque des revendications précédentes, **caractérisé en ce que** la courroie de convoyage (52) s'applique contre le premier rouleau de renvoi (61) dans une plage angulaire de 180°.

6. Dispositif de palettisation (10) selon l'une quelconque des revendications précédentes, **caractérisé en ce qu'**une longueur de la surface de transport (53) est comprise entre 80 % et 120 % de la largeur de la courroie de convoyage (52).

7. Dispositif de palettisation (10) selon l'une quelconque des revendications précédentes, **caractérisé en ce que** la bande de dépôt (50) et le dispositif de compression (80) sont mobiles l'un par rapport à l'autre dans une direction verticale (Z).

8. Dispositif de palettisation (10) selon l'une quelconque des revendications précédentes, **caractérisé en ce que** la butée arrière (82) est mobile dans une direction verticale (Z) d'une position d'attente à une position de travail.

9. Procédé d'exploitation d'un dispositif de palettisation (10) selon l'une quelconque des revendications précédentes, comprenant les étapes suivantes :
- le convoyage d'au moins une couche d'articles (15) sur la surface de transport (53) de la bande de dépôt (50) alors que la bande de dépôt (50) se trouve dans la première position longitudinale,
- le déplacement de la bande de dépôt (50) dans la direction longitudinale (X) vers la deuxième position longitudinale,
la courroie de convoyage (52) en circulation étant entraînée à des vitesses variables de telle sorte que
la couche d'articles (15) se trouvant sur la surface de transport (53) est pressée successivement dans le temps contre la butée avant (81) ainsi que contre la butée arrière (82).

10. Procédé selon la revendication 9, dans lequel, après le déplacement de la bande de dépôt (50) dans la direction longitudinale (X) vers la deuxième position longitudinale,
le dispositif de compression (80) et la bande de dépôt (50) sont déplacés l'un par rapport à l'autre dans une direction verticale (Z) de telle sorte que
la couche d'articles (15) se trouvant sur la surface de transport (53) se trouve à hauteur des butées (81, 82) dans la direction verticale (Z).

11. Procédé selon la revendication 9, dans lequel, après le déplacement de la bande de dépôt (50) dans la direction longitudinale (X) vers la deuxième position longitudinale,
la butée arrière (82) est déplacée d'une position d'attente, dans laquelle la butée arrière (82) se trouve au-dessus de la couche d'articles (15) dans une direction verticale (Z),
à une position de travail, dans laquelle la butée arrière (82) se trouve à hauteur de la couche d'articles (15) dans la direction verticale (Z).

12. Procédé selon l'une quelconque des revendications 9 à 11, dans lequel, pendant le déplacement de la bande de dépôt (50) dans la direction longitudinale (X) de la première position longitudinale vers la deuxième position longitudinale, il n'y a pas d'entraînement de la courroie de convoyage (52) en circulation.
